## Europäisches Patentamt

## European Patent Office

## Office européen des brevets

(19)

(11) Veröffentlichungsnummer: **0 141 160**

**A2**

(12) # EUROPÄISCHE PATENTANMELDUNG

(21) Anmeldenummer: **84110633.9**

(22) Anmeldetag: **06.09.84**

(51) Int. Cl.⁴: **G 06 F 11/22**

(30) Priorität: **09.09.83 DE 3332601**

(43) Veröffentlichungstag der Anmeldung:
**15.05.85 Patentblatt 85/20**

(84) Benannte Vertragsstaaten:
**AT BE CH DE FR GB IT LI NL SE**

(71) Anmelder: **Siemens Aktiengesellschaft
Berlin und München Wittelsbacherplatz 2
D-8000 München 2(DE)**

(72) Erfinder: **Tschöpe, Norbert, Ing.-Grad.
Badstrasse 1
D-8000 München 70(DE)**

(54) **Schaltungsanordnung zum Registrieren von Adressen von einen fehlerhaften Speicherinhalt aufweisenden Speicherzellen.**

(57) Zum Registrieren von Adressen von einen hinsichtlich der Codierung fehlerhaften Speicherinhalt aufweisenden Speicherzellen einer über ein Busleitungssystem (DB, AB, SB) mit einer Zentralsteuereinheit (MPB) verbundenen Speicheranordnung (SBG) ist ein Register (Reg) vorgesehen, in dessen Registerzellen die bei der Durchführung eines Lesezyklus in der Speicheranordnung über das Busleitungssystem übertragene Adresse der ausgewählten Speicherzelle einschreibbar ist. Jeder bei einem solchen Lesezyklus aus einer der Speicherzellen ausgelesener Speicherinhalt wird in einer Fehlererkennungsschaltung (FE) auf einen gegebenenfalls vorhandenen Codierungsfehler überprüft. Bei Erkennen eines derartigen Codierungsfehlers gibt dann die Fehlererkennungsschaltung ein entsprechendes Fehlersignal ab. Auf ein solches Fehlersignal hin sperrt eine Steuereinrichtung (G1, FF) das Register für die Übernahme einer weiteren über das Busleitungssystem übertragenen Adresse. Außerdem veranlaßt diese Steuereinrichtung die Zentralsteuereinheit, die in die Registerzellen des Registers zuletzt eingeschriebene Adresse als Adresse einer fehlerhaften Speicherzelle zu werten.

FIG 1

Schaltungsanordnung zum Registrieren von Adressen von einen fehlerhaften Speicherinhalt aufweisenden Speicherzellen

Die Erfindung betrifft eine Schaltungsanordnung zum Registrieren von Adressen von jeweils einen hinsichtlich der Codierung fehlerhaften Speicherinhalt aufweisenden Speicherzellen einer über ein Busleitungssystem mit einer Zentralsteuereinheit verbundenen Speicheranordnung.

Für die Verarbeitung der einer Zentralsteuereinheit von peripheren Einrichtungen oder von Speicheranordnungen zugeführten Datensignale ist es üblich, die Datensignale vor ihrer Verarbeitung auf eine fehlerfreie Codierung hin zu überprüfen. Hierfür ist eine Vielzahl von Codierungsverfahren bekannt, die ein Erkennen bestimmter, durch Störungen auf dem Übertragungsweg bedingter Verfälschungen der Datensignale ermöglichen. Bei Auftreten derartiger Verfälschungen ist es für eine gezielte Lokalisierung einer fehlerhaften, mit der Zentralsteuereinheit verbundenen peripheren Einrichtung oder Speicheranordnung zweckmäßig, Angaben bezüglich der die verfälschten Datensignale abgebenden Einrichtung oder Speicheranordnung für eine anschliessende Überprüfung zu registrieren.

Der Erfindung liegt nun die Aufgabe zugrunde, einen Weg zu zeigen, wie bei einer Schaltungsanordnung der eingangs genannten Art Adressen von jeweils einen hinsichtlich der Codierung fehlerhaften Speicherinhalt aufweisenden Speicherzellen mit einem geringen zusätzlichen schaltungstechnischen Aufwand registriert werden können.

Kzr 1 Gru / 22.08.1983

Gelöst wird die vorstehend aufgezeigte Aufgabe bei einer Schaltungsanordnung der eingangs genannten Art erfindungsgemäß dadurch, daß mit dem Busleitungssystem ein eine Mehrzahl von Registerzellen aufweisendes Register verbunden ist, in dessen Registerzellen einerseits die jeweilige über das Busleitungssystem übertragene Adresse bei einer Ansteuerung der Speicheranordnung zum Zwecke des Auslesens des Speicherinhaltes der durch diese Adresse bezeichneten Speicherzelle einschreibbar ist und dessen Registerzellen andererseits durch eine entsprechende Ansteuerung von der Zentralsteuereinheit her auslesbar sind, daß eine Fehlererkennungsschaltung vorgesehen ist, welche jeden aus einer der Speicherzellen ausgelesenen Speicherinhalt auf einen gegebenenfalls vorhandenen Codierungsfehler überprüft und welche bei Erkennen eines derartigen Codierungsfehlers ein entsprechendes Fehlersignal abgibt und daß eine Steuereinrichtung vorgesehen ist, die auf ein von der Fehlererkennungsschaltung abgegebenes Fehlersignal hin das Register für die Übernahme einer weiteren über das Busleitungssystem übertragenen Adresse sperrt und außerdem die Zentralsteuereinheit veranlaßt, die in die Registerzellen zuletzt eingeschriebene Adresse als Adresse einer fehlerhaften Speicherzelle zu werten.

Die Erfindung bringt den Vorteil mit sich, daß das Registrieren von Adressen der jeweils einen fehlerhaften Speicherinhalt aufweisenden Speicherzellen ohne dynamische Belastung der zugehörigen Zentralsteuereinheit erfolgt. Lediglich nach dem Abspeichern einer derartigen Adresse erhält die Zentralsteuereinheit ein Signal zugeführt, aufgrund dessen sie gegebenenfalls bestimmte Maßnahmen zur Fortsetzung des Betriebes oder zur Fehlerbehebung einleiten kann.

Für eine weitere Entlastung der Zentralsteuereinheit ist es vorteilhaft, daß in die Speicherzellen der Speicheranordnung mit einem korrigierbaren Code codierte Signale einschreibbar sind, daß die Fehlererkennungsschaltung bei
Erkennen eines Codierungsfehlers gegebenenfalls eine Korrektur der fehlerhaften Codierung vornimmt und zusammen
mit dem Fehlersignal ein Informationssignal abgibt, welches angibt, ob die als fehlerhaft erkannte Codierung korrigiert werden konnte oder nicht, und daß das Register
eine weitere, für die Speicherung eines solchen Informationssignals dienende Registerzelle aufweist.

Zweckmäßigerweise weist die Steuereinrichtung eine bistabile Kippstufe auf, welche bei Auftreten eines Fehlersignals in einen solchen Zustand übergeht, daß eine mit dem
Ausgang dieser Kippstufe verbundene, die Ansteuerung des
Registers ermöglichende Verknüpfungsschaltung sich in
ihrem Sperrzustand befindet. Dies bringt den Vorteil eines
besonders geringen schaltungstechnischen Aufwandes für die
Ansteuerung des Registers mit sich.

Anhand von Zeichnungen wird die Erfindung nachstehend beispielsweise näher erläutert.

Fig. 1 zeigt in einem Blockschaltbild ausschnittweise ein
        Mikroprozessorsystem, bei dem die Erfindung angewandt ist,
Fig. 2 zeigt ein Diagramm, auf das im Zuge der Erläuterung
        der Erfindung eingegangen wird.

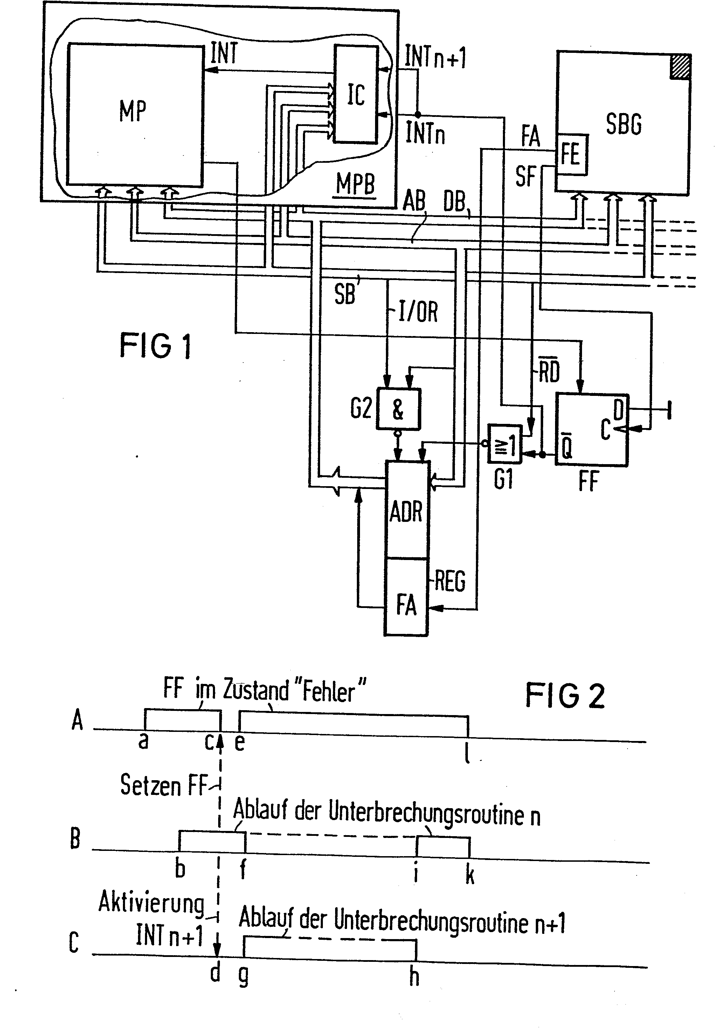

In Fig. 1 ist ausschnittweise ein Mikroprozessorsystem
dargestellt. Dieses System weist eine Mikroprozessorbaugruppe MPB auf, von der lediglich ein Mikroprozessor MP
und eine ihm zugehörige, mehrere Unterbrechungseingänge
INTn, INTn+1 aufweisende Unterbrechungssteuerung IC dargestellt ist. Diese Unterbrechungssteuerung ist ausgangsseitig für die Abgabe eines Unterbrechungssignals, welches
eine Unterbrechung eines von dem Mikroprozessor MP gesteuerten Ablaufes bewirkt, mit einem Unterbrechungssteuereingang INT des Mikroprozessors MP verbunden. Datenein-/ausgänge der Unterbrechungssteuerung IC sind an ein Datenbussystem DB angeschlossen, das für die Übertragung von Datensignalen von bzw. zu dem Mikroprozessor hin dient. Über dieses Datenbussystem werden einerseits zusammen mit einem Unterbrechungssignal zu dem Mikroprozessor hin Informationssignale übertragen. Diese enthalten Angaben bezüglich der Höhe der Unterbrechungspriorität des gerade an einem der Unterbrechungseingänge auftretenden und an den Mikroprozessor weitergeleiteten Unterbrechungssignals. Andererseits können über dieses Datenbussystem, wie später noch erläutert werden wird, durch entsprechende Signale einzelne Unterbrechungseingänge der Unterbrechungssteuerung von dem Mikroprozessor her aktiviert bzw. deaktiviert werden.

Der Mikroprozessor MP und die Unterbrechungssteuerung IC sind zusätzlich mit einem für die Übertragung von Adressensignalen dienenden Adressenbussystem AB und mit einem Steuerbussystem SB verbunden, über das Steuersignale übertragen werden. Bei diesen Steuersignalen handelt es sich um Signale für die Steuerung der Kommunikation zwischen dem Mikroprozessor MP und den mit ihm verbundenen Einrichtungen des Mikroprozessorsystems. Solche Steuersignale sind z.B. Schreib- und Lesesignale für die Steuerung von Speicheranordnungen oder peripheren Einrichtungen. Von diesen zu dem Mikroprozessorsystem gehörenden Speicheranordnungen und peripheren Einrichtungen ist in Fig. 1 lediglich eine mit SBG bezeichnete Speicheranordnung dargestellt.

Die Speicheranordnung SBG, die an die oben angegebenen Bussysteme angeschlossen ist, weist bei dem hier beschriebenen Ausführungsbeispiel eine in Fig. 1 mit FE bezeichnete Fehlererkennungsschaltung auf, die bei Auslesen einer Speicherzelle deren Speicherinhalt auf einen vorhandenen Codierungsfehler überprüft und diesen gegebenenfalls korrigiert. Hierfür sind die innerhalb des Mikroprozessorsystems zu übertragenden Datensignale nach dem als Hamming-Code bekannten Code codiert. Dieser Code ermöglicht eine Korrektur von 1-Bit-Fehlern und ein Erkennen von 2-Bit-Fehlern. Bei Erkennen eines dieser Fehler gibt die Fehlererkennungsschaltung FE an einem Fehlerausgang SF ein entsprechendes Fehlersignal ab. Außerdem gibt sie noch an einem mit FA bezeichneten Ausgang ein Informationssignal ab, welches angibt, ob die als fehlerhaft erkannte Codierung korregiert werden konnte oder nicht.

Der gerade erwähnte Fehlerausgang SF der Speicheranordnung SBG ist mit dem Takteingang einer bistabilen Kippstufe FF verbunden. Bei dieser Kippstufe handelt es sich um eine sogenannte D-Kippstufe, deren D-Eingang mit Masse bzw. mit einem dem logischen O-Pegel entsprechenden Potential verbunden ist und deren Ausgang $\bar{Q}$ von dem Mikroprozessor MP her in einen definierten Ausgangszustand setzbar ist. Der mit $\bar{Q}$ bezeichnete Ausgang ist dabei an die Unterbrechungseingänge INTn und INTn+1 der bereits oben erwähnten Unterbrechungssteuerung IC der Mikroprozessorbaugruppe MPB angeschlossen. Mit n bzw. n+1 soll dabei die Höhe der den Unterbrechungseingängen jeweils zugeordneten Unterbrechungspriorität angegeben werden, d.h. ein am Eingang n+1 anliegendes Unterbrechungssignal hat Vorrang gegenüber einem entsprechenden, am Einang n anliegenden Signal. Hier sei bereits darauf hingewiesen, daß im fehlerfreien Zustand des Mikroprozessorsystems lediglich der Unterbrechungseingang INTn aktiviert ist. Der Unterbrechungseingang INTn+1 ist zunächst deaktiviert. Wie bereits erwähnt, erfolgt die Aktivierung bzw. Deaktivierung der einzelnen Unterbrechungseingänge durch von dem Mikroprozessor her über das Datenbussystem DB übertragene Signale. Für die Übernahme dieser Signale wird die Unterbrechungssteuerung IC über das Adressenbussystem AB und das Steuerbussystem SB angesteuert.

Der mit Q̄ bezeichnete Ausgang der Kippstufe FF ist außerdem mit einem Eingang eines NOR-Gliedes G1 verbunden. An einem weiteren Eingang erhält dieses NOR-Glied ein über das Steuerbussystem SB übertragenes Lesesignal R̄D̄ zugeführt, mit dem eine Speicherzelle der Speicheranordnung SBG ausgelesen wird. Der Ausgang des NOR-Gliedes G1 ist an einem Freigabeeingang eines aus zwei getrennten Registerbereichen bestehenden Registers Reg angeschlossen. Ein erster, mit ADR bezeichneter Registerbereich dient für die Aufnahme einer über das Adressenbussystem AB übertragenen Adresse. Er enthält hierzu eine der Anzahl der zu einer Adresse gehörenden Adressenbits entsprechende Anzahl von Registerstellen. Ausgangsseitig gibt dieser Registerbereich auf eine entsprechende Ansteuerung von dem Mikroprozessor MP her die in ihm gespeicherte Adresse an das Datenbussystem DB ab.

In einen zweiten, mit FA bezeichneten Registerbereich des Registers Reg wird das bei Erkennen eines Codierungsfehlers von dem Ausgang FA der Speicheranordnung SBG abgegebene Informationssignal übernommen. Dieses Informationssignal wird zusammen mit der in dem Registerbereich ADR gespeicherten Adresse bei einer entsprechenden Ansteuerung an das Datenbussystem DB abgegeben. Die gerade erwähnte Ansteuerung des Registers Reg für die Abgabe der in ihm gespeicherten Signale erfolgt mit Hilfe eines NAND-Gliedes G2. Dieses NAND-Glied erhält an einem seiner Eingänge von dem Mikroprozessor her über das Steuerbussystem SB ein Lesesignal I/OR zugeführt, mit dem eine Übergabe von in Ein-/Ausgabeeinrichtungen gespeicherten Signalen gesteuert wird. Ein weiterer Eingang des NAND-Gliedes G2 ist mit einer Adressenleitung des Adressenbussystems AB verbunden, über die für die Adressierung des Registers Reg als Ausgabeeinrichtung ein entsprechendes Adressensignal übertragen wird.

Nachdem zuvor der Aufbau der in Fig. 1 dargestellten Schaltungsanordnung erläutert worden ist, wird nunmehr unter Bezugnahme auf Fig. 2 die Arbeitsweise dieser Schaltungsanordnung beschrieben. Hierzu sei angenommen, daß das in Fig.1 dargestellte Mikroprozessorsystem sich zunächst in einem fehlerfreien Zustand befindet. In diesem Zustand ist die Kippstufe FF von dem Mikroprozessor her so gesetzt, daß sie an ihrem Q̄-Ausgang einen logischen O-Pegel abgibt. Der Unterbrechungseingang INTn+1 der Unterbrechungssteuerung IC ist, wie bereits erwähnt, im fehlerfreien Zustand deaktiviert.

Werden nun von dem Mikroprozessor MP her für das Auslesen von in den Speicherzellen der Speicheranordnung SBG gespeicherten Signalen Lesesignale R̄D̄ abgegeben, so wird das Register Reg über das NOR-Glied G1 mit jedem Lesesignal für die Übernahme der zusammen mit dem jeweiligen Lesesignal über das Adressenbussystem AB übertragenen Adresse freigegeben. Mit jeder auf diese Weise übernommenen Adresse wird eine zuvor gespeicherte Adresse überschrieben. Wird bei dem Auslesen einer der Speicherinhalte durch die Fehlererkennungsschaltung FE ein Codierungsfehler erkannt und gegebenenfalls korrigiert, so gibt diese an ihrem Ausgang SF ein Fehlersignal und an ihrem Ausgang FA ein Informationssignal ab. Mit dem Informationssignal, das in den Registerbereich FA des Registers Reg übernommen wird, wird dem Mikroprozessor MP, wie bereits oben erwähnt, angezeigt, ob der Codierungsfehler korrigierbar war oder nicht. Durch das Auftreten eines Fehlersignals geht die Kippstufe FF in einen fehleranzeigenden Zustand über (a in Fig. 2). Dieser Zustand ist durch einen logischen 1-Pegel am Ausgang Q̄ gekennzeichnet. Dieser logische Pegel bewirkt das Sperren des NOR-Gliedes G1, so daß die gerade in das Register Reg übernommene Adresse der den fehlerhaften Speicherinhalt aufweisenden Speicherzelle nicht durch weitere Adressen überschrieben werden kann.

In dem fehleranzeigenden Zustand liegt am $\bar{Q}$-Ausgang der Kippstufe FF ein logischer 1-Pegel an. Dieser logische Pegel wird von der Unterbrechungssteuerung IC als Unterbrechungssignal interpretiert und an den Mikroprozessor MP weitergeleitet. Da hier zunächst der Unterbrechungseingang n+1 deaktiviert ist, wird zusätzlich zu diesem Unterbrechungssignal ein Informationssignal zu dem Mikroprozessor hin übertragen, das dem Unterbrechungssignal die Unterbrechungspriorität n zuweist. Aufgrund dieser Signale beendet der Mikroprozessor die gerade von ihm gesteuerten Abläufe und startet eine der Unterbrechungspriorität n entsprechende Unterbrechungsroutine (b in Fig. 2). Im Verlauf dieser Unterbrechungsroutine erfolgt eine Übernahme der in dem Register Reg gespeicherten Adresse und des in dem Registerbereich FA gespeicherten Informationssignals in den Mikroprozessor. Anschließend wird die Kippstufe FF wieder in ihre Ausgangsstellung gesetzt (c in Fig. 2). Außerdem wird der Unterbrechungseingang n+1 der Unterbrechungssteuerung IC nunmehr aktiviert (d in Fig. 2).

Nach der Übernahme der in dem Register Reg gespeicherten Adresse zusammen mit dem in dem Registerbereich FA gespeicherten Informationssignal wird von dem Mikroprozessor her die dieser Adresse entsprechende Speicherzelle erneut ausgelesen. Ergibt eine Überprüfung des Speicherinhaltes durch die Fehlererkennungsschaltung FE, daß wiederum ein Codierungsfehler vorliegt, so geht die Kippstufe FF erneut in ihren fehleranzeigenden Zustand über (e in Fig. 2). Die Unterbrechungssteuerung IC erkennt über den nunmehr aktivierten Unterbrechungseingang n+1 ein Unterbrechungssignal und leitet dieses unter Angabe der Unterbrechungspriorität n+1 an den Mikroprozessor weiter. Da dieses Unterbrechungssignal eine gegenüber dem Unterbrechungssignal, das die gerade ablaufende Unterbrechungsroutine ausgelöst hat, höhere Unterbrechungspriori-

**83 P 1 6 6 0 E**

0141160

tät aufweist, wird die gerade ablaufende Unterbrechungsroutine unterbrochen (f in Fig. 2) und eine der Unterbrechungspriorität n+1 entsprechende Unterbrechungsroutine
gestartet (g in Fig. 2). Nach Ablauf der Unterbrechungsroutine n+1 (h in Fig. 2) wird die zunächst unterbrochene
Unterbrechungsroutine n fortgesetzt (i bis k in Fig. 2).
Vor Beendigung dieser Unterbrechungsroutine wird die Kippstufe FF wieder in ihre Ausgangsstellung gesetzt, um gegebenenfalls weitere Fehler in der Speicheranordnung SBG zu
erkennen (1 in Fig. 2).

Durch den gerade erläuterten verschachtelten Ablauf der
Unterbrechungsroutinen n und n+1 ist es möglich, bei in
der Speicheranordnung SBG auftretenden Fehlern zwischen
über eine vorgegebene erste Zeitspanne hinweg vorliegenden statischen bzw. eine vorgegebene zweite Zeitspanne
nicht überschreitenden dynamischen Fehlern zu unterscheiden. Durch den Ablauf der Unterbrechungsroutine n ohne
Unterbrechung aufgrund eines Unterbrechungssignals mit
der Unterbrechungspriorität n+1 werden die bei Auftreten
von dynamischen Fehlern erforderlichen Maßnahmen gesteuert. Tritt dagegen eine Unterbrechung der Unterbrechungsroutine n auf, wie es der Fall bei einem statischen Fehler ist, so werden durch die Unterbrechungsroutine n+1
in Verbindung mit der Unterbrechungsroutine n die bei
statischen Fehlern erforderlichen Maßnahmen gesteuert.

In Fig. 1 ist lediglich der Fall dargestellt, daß sämtliche Speicherzellen der Speicheranordnung SBG räumlich
zusammengefaßt und mit einer gemeinsamen Fehlererkennungsschaltung FE verbunden sind. Die zu der Speicheranordnung gehörenden Speicherzellen können aber auch innerhalb des Mikroprozessorsystems auf verschiedene Schaltungsbaugruppen verteilt sein. In diesem Fall ist es vorteilhaft, die Fehlererkennungsschaltung FE zentral in der
Mikroprozessorbaugruppe MPB anzuordnen.

0141160

Abschließend sei hier noch angemerkt, daß unter Speicherzellen der Speicheranordnung SBG nicht nur Speicherzellen
von Festwertspeichern und von Schreib-/Lesespeichern zu
verstehen sind. Vielmehr sollen hierunter generell Datensignale speichernde Elemente des Mikroprozessorsystems, wie
z.B. Register, Ein-/Ausgabebausteine usw., verstanden werden, die von dem Mikroprozessor MP her für die Übergabe
der in ihnen gespeicherten Datensignale über Adressen ansteuerbar sind.

3 Patentansprüche
2 Figuren

<u>Patentansprüche</u>

1. Schaltungsanordnung zum Registrieren von Adressen von jeweils einen hinsichtlich der Codierung fehlerhaften Speicherinhalt aufweisenden Speicherzellen einer über ein Busleitungssystem (DB, AB, SB) mit einer Zentralsteuereinheit (MPB) verbundenen Speicheranordnung (SBG), d a d u r c h   g e k e n n z e i c h n e t , daß mit dem Busleitungssystem ein eine Mehrzahl von Registerzellen aufweisendes Register (Reg) verbunden ist, in dessen Registerzellen einerseits die jeweilige über das Busleitungssystem übertragene Adresse bei einer Ansteuerung der Speicheranordnung zum Zwecke des Auslesens des Speicherinhaltes der durch diese Adresse bezeichneten Speicherzelle einschreibbar ist und dessen Registerzellen andererseits durch eine entsprechende Ansteuerung von der Zentralsteuereinheit her auslesbar sind,
daß eine Fehlererkennungsschaltung (in SBG oder MPB) vorgesehen ist, welche jeden aus einer der Speicherzellen ausgelesenen Speicherinhalt auf einen gegebenenfalls vorhandenen Codierungsfehler überprüft und welche bei Erkennen eines derartigen Codierungsfehlers ein entsprechendes Fehlersignal abgibt
und daß eine Steuereinrichtung (G1, FF) vorgesehen ist, die auf ein von der Fehlererkennungsschaltung abgegebenes Fehlersignal hin das Register für die Übernahme einer weiteren über das Busleitungssystem übertragenen Adresse sperrt und außerdem die Zentralsteuereinheit veranlaßt, die in die Registerzellen zuletzt eingeschriebene Adresse als Adresse einer fehlerhaften Speicherzelle zu werten.

2. Schaltungsanordnung nach Anspruch 1, d a d u r c h   g e k e n n z e i c h n e t , daß in die Speicherzellen der Speicheranordnung mit einem korrigierbaren Code codierte Signale einschreibbar sind,
daß die Fehlererkennungsschaltung bei Erkennen eines Codierungsfehlers gegebenenfalls eine Korrektur der fehlerhaften Codierung vornimmt und zusammen mit dem Fehlersignal ein Informationssignal abgibt, welches angibt, ob die als fehlerhaft erkannte Codierung korrigiert werden konnte oder nicht,
und daß das Register eine weitere, für die Speicherung eines solchen Informationssignals dienende Registerzelle aufweist.

3. Schaltungsanordnung nach Anspruch 1 oder 2, d a d u r c h  g e k e n n z e i c h n e t , daß die Steuereinrichtung eine bistabile Kippstufe (FF) aufweist, welche bei Auftreten eines Fehlersignals in einen solchen Zustand übergeht, daß eine mit dem Ausgang dieser Kippstufe verbundene, die Ansteuerung des Registers ermöglichende Verknüpfungsschaltung (G1) sich in ihrem Sperrzustand befindet.

0141160

1/1

FIG 1

FIG 2

FF im Zustand "Fehler"

A

Setzen FF

Ablauf der Unterbrechungsroutine n

B

Aktivierung
INT n+1

Ablauf der Unterbrechungsroutine n+1

C